# EUROPEAN PATENT APPLICATION

(11) **EP 0 995 388 A1**
(43) Date of publication of application: **26.04.2000**
(21) Application number: 99203276.3
(22) Date of filing: 07.10.1999
(51) Int. Cl.: A47J 45/02, A47J 31/00

(54) **Device for the making of hot drinks and the use of such a device**

(30) Priority: 21.10.1998 DK 39298
(71) Applicant: Rasmussen, John Ville, 5260 Odense 5 (DK)
(72) Inventor: Rasmussen, John Ville, 5260 Odense 5 (DK)
(74) Representative: Elmeros, Claus

(57) **Abstract**

The present invention relates to a device for the making of hot drinks and consists of a cabinet in which brewing means are arranged comprising a water reservoir and potentially one or more coffee containers connected to a brewing unit from which heated water may be extracted into a cup, mug or the like placed under it for filling together with storage means for storage of stockpile of accessories such as cups, teaspoons, small bags with sugar, powdered milk, tea, powdered coffee, cocoa etc. where the cabinet comprises a first and second cabinet part mutually connected by a side hinge in such a manner that the two cabinet parts may be closed towards each other and that the brewing means are arranged in the first cabinet part and the storage means in the second cabinet part. In this manner, a device for the making of hot drinks is obtained whose design is particularly compact and similar in size to that of a large book or a ring binder. According to the invention, the device is also easily put aside when not in use partly due to its size but also partly because it is collapsible and thus capable of being stored on e.g. a work table without constituting a nuisance with regard to both size and design.

## Description

The present invention relates to a device for the making of hot drinks comprising a cabinet in which brewing means have been arranged comprising a water reservoir and potentially one or more coffee containers connected to the brewing unit from which heated water may be extracted in a cup, mug or the like when placed under the unit for filling and storage means for storage of accessories such as cups, teaspoons, small bags of sugar, powdered milk, tea, powder coffee, cocoa etc.

It is common to have hot water and/or coffee vending machines or similar devices installed in garages, office areas etc., so that employees and others may treat themselves to a hot drink such as tea, coffee, cocoa or the like.

Often, these machines are placed in such a manner that they are easily accessible for a group of people. The vending machines are typically relatively big and voluminous. However smaller devices exist that may be placed on e.g. a table.

In that connection, heating devices have been developed that are relatively compact in their design and completely self-containing so that the device only needs power to operate. Thus, such devices are practical for the user since they are equipped with a storage unit for disposable cups, frays for sugar, powdered milk, tea bags etc. and since they may be placed in near proximity of the user in e.g. a garage or an office space.

Meanwhile, existing devices cannot exactly be characterized as decorative just as they may take up a relatively large amount of office space.

Based on this, the purpose of the invention is to create a device for the making of hot drinks that takes into account the above-mentioned disadvantages known from existing devices.

The invention consists of a device of the initially mentioned kind where the cabinet comprises a first and a second cabinet part mutually connected by a side hinge in such a manner that the two cabinet parts may be closed and where the brewing means have been placed in the first cabinet part and the storing means in the second cabinet part.

In this manner, it is possible to create a device for the making of hot drinks whose design is quite compact and similar in size to that of a large book or a ring binder. According to the invention, the device is easily set aside when not in use and because of its size and the fact that it is collapsible, it may be placed on a working table without constituting an nuisance with regard to both size and design.

According to the invention, the device may be used for the making of hot drinks in garages, production or office environments when placed on e.g. a desk or mounted on a wall as long as it is sufficiently open, meaning that it should be partially open, so that the device may be operated by the user. The device may thus be placed on a table or the like in partially open condition making it self-supporting or completely open and e.g. mounted on a wall. Furthermore, the device is portable, according to the preferred embodiment of the invention.

According to the preferred embodiment of the invention, the brewing means and the storage means have been arranged in such a manner that the fronts of the first and the second cabinet parts are closed towards each other due to the side hinge between the two fronts of the preferably box-shaped cabinet parts. In this manner, a simple and integrated embodiment of the invention is obtained.

According to the preferred embodiment, it is possible to arrange a platform for insertion of a cup in the filling position under the heating unit constituting part of the brewing means in the first cabinet part. In this manner, it is possible to prevent spilling on the base when filling up a cup or a mug. This platform may also work as a tray.

The storage means in the second cabinet part essentially comprise a vertically oriented and essentially cylinder-like storage unit for storage of stacked cups such a disposable cups/holders made of plastic or foam. In this manner, the design becomes attractive while also featuring a constructive integrated storage unit of disposable cups, tea, cocoa, powdered sugar, milk etc.

According to the preferred embodiment of the invention, the heating means in the second cabinet part comprise replaceable module-shaped depots with accessories and/or ingredients for hot drinks. This means that the device, according to this embodiment, may easily and quickly be serviced and refilled with new prepared packs of ingredients and other accessories in case it runs empty.

According to the preferred embodiment, the brewing unit contains a ball-shaped heating tank and a cone-shaped mixing container. The ball-shaped tank makes it possible to obtain a particularly compact embodiment of the tank while also offering a relatively large volume.

On the back, the cabinet parts may be provided with suspension means such as one or more horizontally oriented hooked notches for coupling with e.g. one or more suspension fittings mounted on the wall with a corresponding cross-section design for suspension of the device on a wall.

In the following, the device has been described in detail with reference to the drawings where
- Fig. 1: shows a perspective illustration of a device for the making of hot drinks according to the invention,
- Fig. 2 to 4: show various possible capabilities of a device according to the invention.
- Fig. 5 to 13: show top, bottom, side and front illustrations of a device according to the invention.

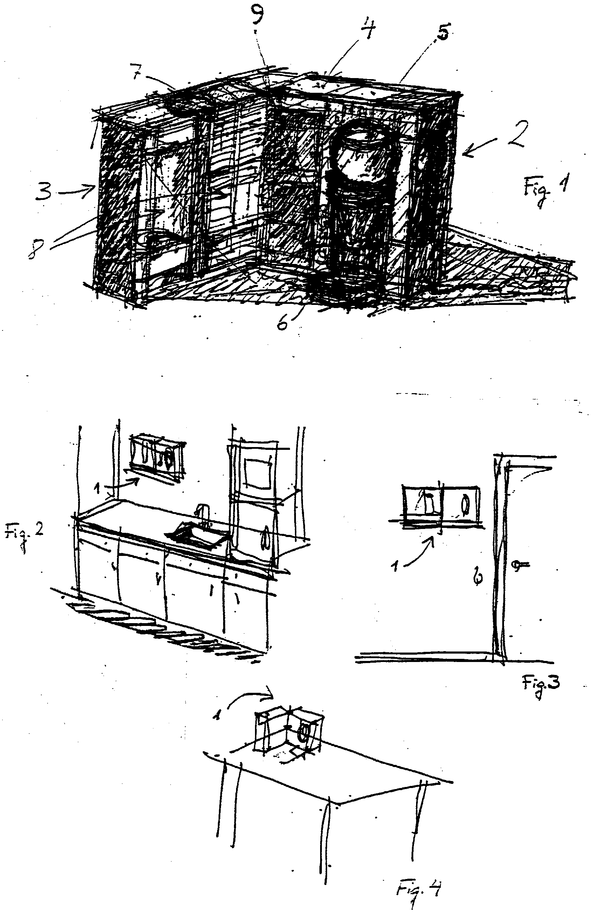

Figure 1 shows a device for the making of hot drinks according to the invention. The design is compact and resembles that of a large book with a cabinet 1 divided into a first cabinet part 2 and a second cabinet part 3. The two cabinet parts 2,3 have been side-hung with a hinge 9. In the first cabinet part 2, hot water is produced and may be extracted into a mug. The second cabinet part 3 contains various ingredients and other accessories tat are available to the user of the device. The device is thus completely self-containing.

The first cabinet part 2 e.g. is equipped with a water reservoir 4, preferably consisting of a replaceable bottle and containers of powdered coffee and technical installations. From this location, the water may be lead to the brewing unit 5 where it is heated in a heating unit 10 and led through the mixing bin 11 or a separate tube for tea water and into a mug placed on the filling platform 6. Also, the first cabinet part 2 has built-in controlling means 12 for operation of the brewing unit 5 by the user.

The second cabinet part 3 is designed to contain storage means so that the device may feature a stockpile of accessories for the making of hot drinks. Thus, the cabinet essentially contains a vertically oriented storage unit 7 for storage of disposable cups in the cylinder-like storage unit 7 when stacked.

In addition, there are depots/modules 8 for storage of teaspoons, small bags of sugar, powdered milk, coffee, cocoa etc.

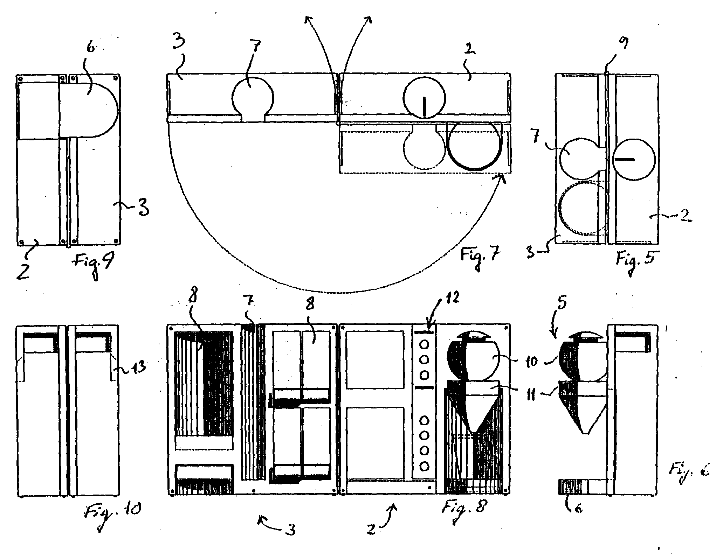

Figures 2 to 4 show the various potential locations of a device according to the invention. Thus, it may be completely open and mounted on a wall as illustrated in figures 2 and 3 or placed in a partially open position on the edge of table as illustrated in figure 4.

In a preferred embodiment, the mounting on the wall may be made by one or more horizontally oriented notches 13 with a hooked cross-section design. The wall also features a suspension fining 14 with a similarly hooked cross-section design corresponding to the shape of the notches 13 on the cabinet parts 2,3.

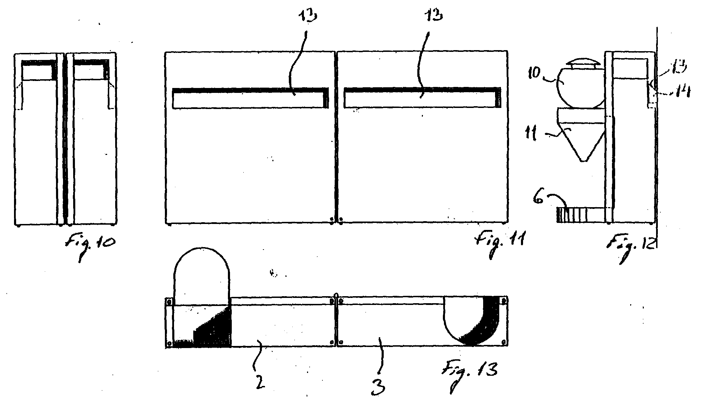

Figures 5 to 13 illustrate the device from various angles so that its construction is more easily understood. Thus, figures 6, 8 and 12 obviously show the heating unit 10 which is shaped like a ball. This means that it is possible to obtain a compact water tank while also providing the device with an aesthetic identity.

## Claims

1. A device for the making of hot drinks comprising
a cabinet (1) equipped with
brewing means comprising a water reservoir (4) and potentially one or more coffee containers connected to the brewing unit (5) from which hot water may be extracted into a cup, mug or the like placed under it for filling and
storage means (7,8) for storage of stockpile of accessories such as cups, teaspoons, small bags of sugar, powdered milk, tea, coffee, cocoa etc,
**characterized by**
the cabinet (1) comprising a first and a second cabinet part (2, 3) that are mutually connected by side hinge means (9) in such a manner that the two cabinet parts (2, 3) can be closed, and
the brewing means (4, 5) being arranged in the first cabinet part (2) and the storage means (7, 8) have been arranged in the second cabinet part (3).

2. A device, according to claim 1, wherein the brewing means (4, 5) and the storage means (7, 8) have been arranged in the front of the first (2) and the second cabinet parts (3) respectively in such a manner that the front of the two cabinet parts (2, 3) are closed towards each other due to the design of the side binge means (9) between the two fronts of the preferably box-shaped cabinet parts (2, 3).

3. A device, according to claims 1 and 2, wherein a platform (6), such as a tray with a drain grate, has been arranged under the heating unit (5) for reception of a cup in the filling position forming part of the brewing means in the first cabinet part (2).

4. A device, according to claims 1 to 3, wherein the storage means in the second cabinet part (3) consist of an essentially vertically oriented cylinder-shaped storage unit (7) for storage of stacked cups such as disposable cups/holders made of plastic or foam.

5. A device, according to any of the previous claims, wherein the storage means in the second cabinet part (3) consist of replaceable modular depots (8) with accessories and/or ingredients for hot drinks.

6. A device, according to any of the previous claims, wherein the first cabinet part (2) is equipped with brewing means (4, 5) comprising a water reservoir and powdered coffee containers and control and operating means (12) for operation of the brewing means by the user and in that the water reservoir consists of a replaceable water bottle.

7. A device, according to any of the previous claims, wherein the brewing unit (5) consists of a ball-shaped heating tank (10) and a mixing bin (11).

8. A device, according to any of the previous claims, wherein the cabinet parts (2, 3) are provided with suspension means (13, 14) on the back such as one or more horizontally oriented hooked notches (13) for coupling with e.g. one or more suspension fittings (14) mounted on a wall with a corresponding cross-section design for mounting of the device on a wall.

9. A device, according to any of the previous claims, wherein the device is portable.

10. A depot module (8) for a device, according to claim 5, provided with accessories, bags or similar packs with ingredients for hot drinks.

11. Use of a device, according to any of the claims 1 to 9, for the making of hot drinks where the device is placed in an office environment on e.g. a desk or mounted on a wall **characterized by** the device being sufficiently open, i.e. at least partially open, so that the user may operate the device.

12. Use of a device, according to claim 11, where the device is placed on a table or the like in partially open condition making it self-supporting.

13. Use, according to claim 11, where the device is completely open and mounted on a wall.
